# EUROPÄISCHE PATENTSCHRIFT

(11) **EP 1 800 943 B1**
(45) Veröffentlichungstag und Bekanntmachung des Hinweises auf die Patenterteilung: **18.02.2009**
(21) Anmeldenummer: 06025412.5
(22) Anmeldetag: 08.12.2006
(51) Int. Cl.: B60N 2/48

(54) **Kopfstütze mit plastisch deformierbarem Komfortelement**
Head restraint with elastically deformable comfort element
Repose-tête doté d'un élément de confort déformable de manière plastique

(30) Priorität: 20.12.2005 DE 102005060912
(43) Veröffentlichungstag der Anmeldung: 27.06.2007
(73) Patentinhaber: GM Global Technology Operations, Inc., Detroit, MI 48265-3000 (US)
(72) Erfinder: Maier, Jürgen, 67808 Weitersweiler (DE)
(74) Vertreter: Strauss, Peter

(56) Entgegenhaltungen:
- EP-A1- 0 677 423
- DE-U1- 9 312 512
- JP-A- 2000 038 070

## Beschreibung

Die Erfindung betrifft eine Kopfstütze mit einem Kopfstützenprallkörper und einem mit diesem verbindbaren sowie plastisch deformierbaren Komfortelement, wobei der Kopfstützenprallkörper mit einer Sitzlehne verbindbar ist und das Komfortelement der Anlage des Kopfes dient.

Derartige Kopfstützen finden insbesondere in Verbindung mit Fahrzeugsitzen Verwendung, wie Autositzen, Zugsitzen, Flugzeugsitzen. Insbesondere bei Autositzen kommt den Kopfstützen die Funktion des Prallschutzes bei einem Crash und darüber hinaus eine Komfortfunktion zu. So ist man bestrebt, die Kopfstütze so anzuordnen, dass sich der Hinterkopf des Fahrzeuginsassen ergonomisch günstig an die Kopfstütze anlegen kann.

Aus der DE 101 96 653 T1 ist eine Kopfstütze der eingangs genannten Art bekannt, die dem Oberbegriff des Anspruchs 1 entspricht. Diese ist, zur Erhöhung des Komforts für die Person, mit dem plastisch deformierbaren Komfortelement versehen. Dieses als Schaumteil ausgebildete Komfortelement wird bevorzugt manuell verformt, um eine günstige Anlagefläche für den Kopf zu bieten.

Bei dieser bekannten Kopfstütze weist das plastisch deformierbare Komfortelement erste und zweite Seiten- oder Flügelabschnitte auf, zum stützenden Anlehnen an die Seitenabschnitte des Kopfes der Person, insbesondere wenn sie ruht. Diese Seitenabschnitte schließen mit einem diese verbindenden hinteren Element die Form eines U ein. Die gewünschte Form wird dem Komfortelement dadurch verliehen, dass dieses einen U-förmigen Rahmen aus biegsamen Material wie Aluminium, Kunststoff, Verbundstoff oder Stahl aufweist. Dieser Rahmen ist ausreichend steif, um laterale Krafteinwirkungen auf die Seitenabschnitte abzustützen.

Nachteilig ist bei dieser Kopfstütze, dass das plastisch deformierbare Komfortelement nur um eine einzige Raumachse verformbar ist. Darunter werden alle Achsen verstanden, die im Wesentlichen parallel zueinander angeordnet sind. Dieses Komfortelement gemäß dem Stand der Technik kann nicht um beliebige Raumachsen verformt werden, insbesondere nicht um Raumachsen, die senkrecht zueinander stehen. Insofern ist die Verformbarkeit des plastisch deformierbaren Komfortelements deutlich eingeschränkt.

Um den Fahrzeuginsassen einen optimalen Komfort zu bieten, ist eine Kopfstütze anzustreben, die eine umfassende Anlage des Kopfs, sowohl auf den Bereich des Hinterkopfs, als auch auf die seitlichen Bereiche des Kopfs bezogen, gewährleistet.

Es ist Aufgabe der vorliegenden Erfindung, eine Kopfstütze der eingangs genannten Art so weiterzubilden, die die vorgenannten Nachteile des Standes der Technik vermeidet und eine ergonomisch optimale Anlage des Kopfes des Insassen an der Kopfstütze, konkret dem plastischen deformierbaren Komfortelement, gewährleistet ist.

Gelöst wird die Aufgabe bei einer Kopfstütze der eingangs genannten Art mit den Merkmalen des Anspruchs 1.

Bei der erfindungsgemäßen Kopfstütze besteht die Möglichkeit, das Komfortelement beliebig der Kontur des Kopfes des Insassen im Bereich des Hinterkopfes und der Seiten des Kopfes anzupassen. Dies ist auf Grund der Verformbarkeit des Komfortelements um verschiedene Raumachsen möglich. Es ist nicht nur die Verformbarkeit des Komfortelements um die Raumachse, die im Wesentlichen vertikal verläuft und damit die Möglichkeit eröffnet, Seitenabschnitte des Komfortelements an den Kopf des Insassen heranzuführen, gewährleistet, sondern es kann das Komfortelement um eine im Wesentlichen senkrecht zu dieser Raumachse stehende Raumachse gleichfalls verformt werden, beispielsweise um eine im Wesentlichen horizontale Raumachse. Schließlich besteht grundsätzlich auch die Möglichkeit, das Komfortelement in der Dritten der drei Raumachsen zu verformen.

So ist gemäß einer bevorzugten Ausführungsform vorgesehen, dass das Komfortelement einen plastisch verformbaren Rahmen und ein plastisch deformierbares Schaumteil aufweist, wobei das Schaumteil um den Rahmen geschäumt ist und diesen somit aufnimmt. Der Rahmen gibt somit, gemäß seiner plastisch deformierten Gestalt, die plastische Gestalt des Schaumteils vor. Der Fahrzeuginsasse muss nur das Komfortelement ergreifen und verformen, wobei der Rahmen und das Schaumteil entsprechend verformt werden und in der gewünschten verformten Position verbleiben.

Der plastisch verformbare Rahmen ist beispielsweise durch starre Teilstücke und diese verbindende plastische Deformationselemente gebildet. Unter diesem Aspekt ist es vorteilhaft, die starren Teilstücke als Drahtstücke auszubilden, wobei jedes plastische Deformationselement auf einander abgewandten Enden ein starres Teilstück aufnimmt. Es ist genauso denkbar, den Rahmen als Drahtrahmen auszubilden. In diesem Fall ist die Stärke des Drahtes so zu wählen, dass die gewünschte Deformation des Schaumteils und damit des Komfortelemente durch Biegen des Drahtrahmens zu Stande kommt. Demnach ist der Rahmen insgesamt aus plastisch deformierbarem Material gebildet. Das Komfortelement ist vorzugsweise unmittelbar über den Rahmen oder über eine diesen aufnehmende Tragstruktur im Kopfstützenprallkörper gelagert. In diesem Fall ist die Tragstruktur gleichfalls Bestandteil des Komfortelements.

Die Verbindung des Komfortelements, insbesondere dessen Rahmen, kann auf unterschiedliche Art und Weise mit dem Kopfstützenprallkörper erfolgen. Die Verbindung geschieht vorzugsweise mittels einer Klipsverbindung, die es demzufolge gestattet, das Komfortelement unkompliziert mit dem Kopfstützenprallkörper zu verbinden und auch wieder von diesem zu lösen.

Der Kopfstützenprallkörper und das plastisch deformierbare Komfortelement sind insbesondere als unabhängige Baueinheiten zu sehen, wobei die Kopfstütze durchaus ohne das plastisch deformierbare Komfortelement, somit auf Grund des Kopfstützenprallkörpers, funktionsfähig ist. Das plastisch deformierbare Komfortelement bildet in aller Regel einen notwendigen Bestandteil der Kopfstütze, kann aber durchaus auch als Zubehörteil nachgekauft werden. In diesem Fall ist es nur erforderlich, den Kopfstützenprallkörper mit einer Aufnahme zum Befestigen des Komfortelements an diesem auszustatten.

Auf Grund der separaten Baueinheiten, demnach der unabhängigen Funktionalität des Komfortelements, ist dieses insbesondere mit einem eigenständigen Bezug umgeben. Entsprechendes gilt für den Kopfstützenprallkörper. Dieser bildet aber vorzugsweise mit einem hinteren Schaumteil der Kopfstütze eine Baueinheit. Dieses hintere Schaumteil deformiert sich bei einem Aufprall eines hinteren Insassen. Die Einheit von Kopfstützenprallkörper und hinterem Schaumteil ist mittels eines separaten Bezuges getrimmt.

Es ist insbesondere vorgesehen, dass der Kopfstützenprallkörper ohne Bezug ausgebildet ist, und das Komfortelement unmittelbar mittels deren Tragstruktur am Kopfstützenprallkörper befestigbar ist. Insbesondere eine derart gestaltete Kopfstütze lässt sich preislich besonders günstig herstellen, bei einfacher Montierbarkeit des Komfortelements und optisch ansprechendem Gesamteindruck.

Die erfindungsgemäße Kopfstütze ermöglicht demnach dem Insassen eine optimale Anlage seines Kopfes am Komfortelement in seiner Eigenschaft als Kopfstützenpolster. Hierdurch wird ein besserer Komfort für den Insassen erzielt, da der Kopf die Seitenbeschleunigungen besser aufnehmen kann. Ferner wird dem Insassen eine optimale Relaxposition angeboten. Die Kopfstütze kann baulich äußert einfach gestaltet werden, weil auf jegliche Art von Gelenken verzichtet werden kann. Dadurch, dass das Komfortelement um verschiedene Raumachsen verformbar ist, lässt sich die Form des Polsterträgers optimal an unterschiedliche Kopfkonturen anpassen. Das plastisch deformierbare Komfortelement kann als sehr einfache Konstruktion ausgeführt werden, mit der Folge niedriger Entwicklungs- und Produktkosten.

In den Figuren ist eine bevorzugte Ausführungsform der Erfindung beschrieben, ohne auf diese beschränkt zu sein. Es zeigt:
- Figur 1: eine räumliche Ansicht der erfindungsgemäßen Kopfstütze, komplett montiert, von vorne gesehen,
- Figur 2: die in Figur 1 gezeigte Kopfstütze ohne das Komfortelement, von vorne gesehen,
- Figur 3: das Komfortelement der Kopfstütze, von hinten gesehen,
- Figur 4: die Anordnung einer vorderen Hälfte des in Figur 2 gezeigten Kopfstützenprallkörpers und der in diesen eingesteckten Tragstruktur mit Rahmen, wobei Tragstruktur und Rahmen Bestandteil des Komfortelements bilden, von vorne gesehen,
- Figur 5: die in Figur 4 veranschaulichten Teile in einer Draufsicht gesehen,

- Figur 6: die in den Figuren 4 und 5 veranschaulichten Teile in einer Seitenansicht gesehen und
- Figur 7: die in den Figuren 4 bis 6 gezeigten Teile in einer räumlichen Ansicht, schräg von vorne gesehen.

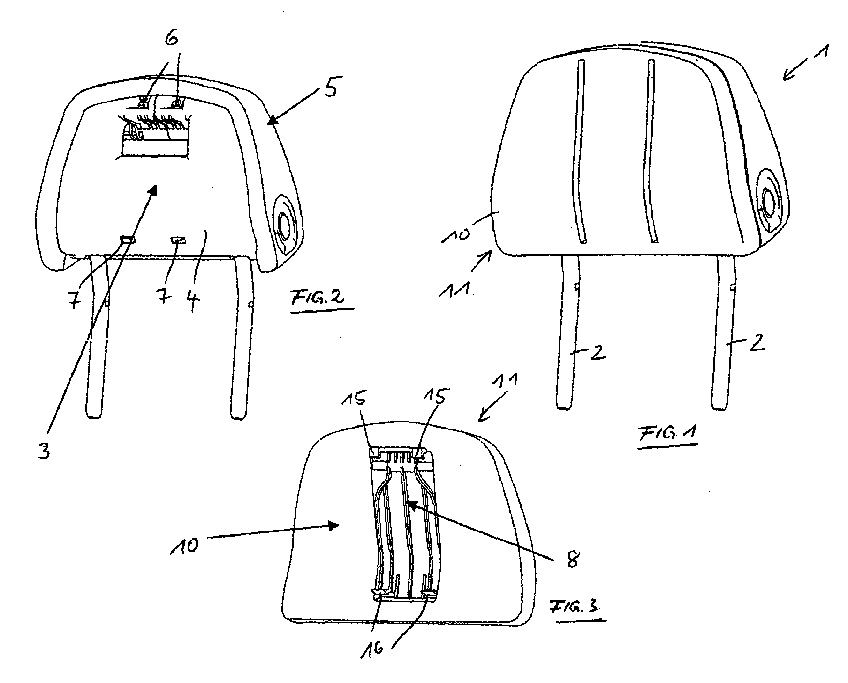

Gezeigt ist in Figur 1 die Kopfstütze 1, die an ihrer Unterseite zwei parallel angeordnete Stangen 2 zum Einstecken in bekannter Art und Weise in Aufnahmen im oberen Bereich einer nicht veranschaulichten Rückenlehne eines Kraftfahrzeugsitzes, beispielsweise des Fahrersitzes, aufweist.

Die Kopfstütze 1 weist einen Kopfstützenprallkörper 3 auf, der durch eine vordere Hälfte 4 des Kopfstützenprallkörpers 3 und eine hintere Hälfte des Kopfstützenprallkörpers 3 gebildet ist, wobei die hintere Hälfte in den Figuren nicht einsehbar ist. Die hintere Hälfte des Kopfstützenprallkörpers 3 nimmt die Stangen 2 auf.

Der Kopfstützenprallkörper 3 und ein hinteres Schaumteil 5 der Kopfstütze 1 werden mit einem nicht veranschaulichten Bezug getrimmt, der demnach den Kopfstützenprallkörper 3 und das hintere Schaumteil 5 umgibt.

Weiterhin weist die vordere Hälfte 4 des Kopfstützenprallkörpers 3 oben zwei Aufnahmen 6 auf, sowie unten zwei Aufnahmen 7 auf. Diese bilden eine Tragstruktur des Kopfstützenprallkörpers 3. Die Aufnahmen 6 und 7 dienen der Aufnahme und Fixierung einer Tragstruktur 8 aus Kunststoff, die einen plastisch deformierbaren Rahmen 9 aufnimmt. Die Tragstruktur 8 und der Rahmen 9 werden von einem plastisch deformierbaren Schaumteil 10 umschlossen und bilden insgesamt ein Komfortelement 11 für die Kopfstütze. Dieses Komfortelement ist zusätzlich mit einem nicht veranschaulichten Bezug getrimmt.

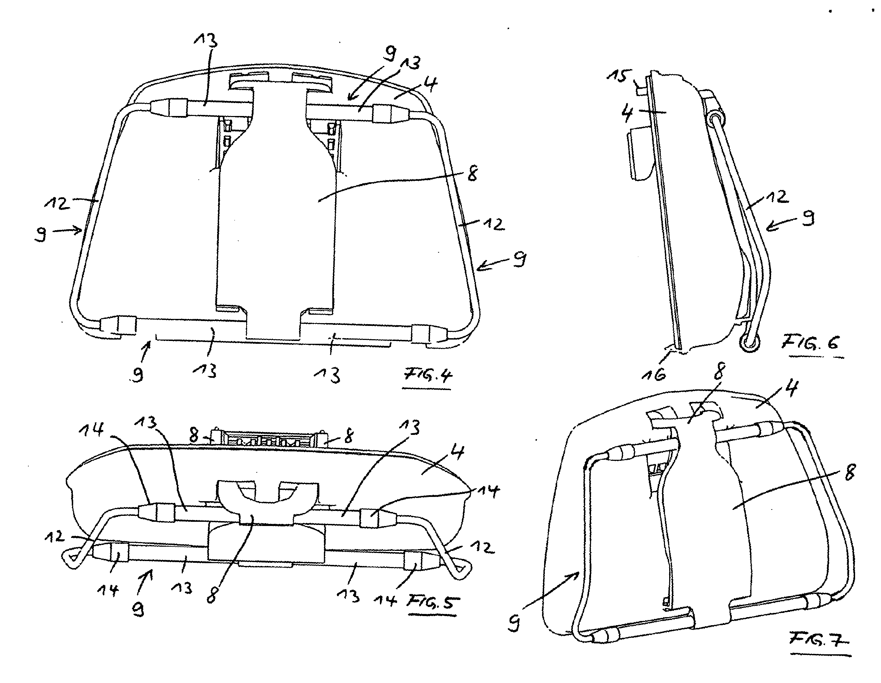

Wesentlich ist bei dem Komfortelement 11 der umschäumte Rahmen 9. Der Darstellung der Figuren 4 bis 7 ist zu entnehmen, dass der Rahmen 9 im Wesentlichen Trapezform aufweist. Der Rahmen 9 weist im Bereich der nicht parallelen Seiten des Trapezes Drahtstücke auf, die starre Teilstücke 12 darstellen und im Bereich der parallelen Seiten des Trapezes plastisch verformbare Teilstücke 13 auf. Die beiden Teilstücke sind im Bereich deren Enden über Verbindungselemente 14, die als Hülsen ausgebildet sind, miteinander verbunden. Die Teilstücke 12 und 13 sind in die Verbindungselemente 14 eingesteckt und mit diesen beispielsweise durch Formschluss verbunden. In etwa auf der halben Länge des jeweils plastisch umformbaren Teilstücks 13 greift die Tragstruktur 8 an diesen an. Die Tragstruktur umschließt im Bereich ihrer Enden die plastisch verformbaren Teilstücke 13 und ist mit elastischen oberen vorderen Vorsprüngen 15 und unteren elastischen Vorsprüngen 16 versehen, die in die Aufnahmen 6 bzw. 7 der vorderen Hälfte 4 des Kopfstützenprallkörpers 3 einsteckbar sind. Hierdurch lässt sich die Tragstruktur 8 und über diese der Rahmen 9, somit das Komfortelement 11, mit dem Kopfstützenprallkörper verbinden.

Die plastisch verformbaren Teilstücke 13 sind insbesondere in Art eines so genannten flexiblen Schwanenhalses ausgebildet. Dieser besteht aus zwei ineinander verdrillten Wendeln, die in beliebigen Positionen zueinander anordbar sind, womit sich der Rahmen 9 in diesen Bereichen beliebig biegen lässt.

Auf Grund der beliebigen Umformbarkeit der plastisch verformbaren Teilstücke 13 lässt sich der Rahmen 9 und damit das Komfortelement 11 um alle möglichen Raumachsen verformen. Unterstützt werden kann diese Verformbarkeit dadurch, dass die an und für sich starr ausgebildeten Teilstücke 12 des Rahmens 9 eine relativ geringe Stärke besitzen, sodass sie durch Biegen beliebig plastisch verformt werden können.

Die flexible Gestaltung des umschäumten Rahmens 9 ermöglicht grundsätzlich eine Verstellbarkeit des Komfortelements 11 in allen drei Raumachsen X, Y und Z.

Insbesondere die Anordnung von Rahmen 9 und Tragstruktur 8 lässt sich auf besonders einfache Art und Weise herstellen. Es werden sowohl die starren Teilstücke 12 als auch die plastisch verformbaren Teilstücke 13 des Rahmens 9 entsprechend einer gewünschten Ausgangsposition in eine Form gelegt und dann alle Kunststoffteile, die mit den Teilstücken 12 und 13 zu verbinden sind, in einem Formvorgang hergestellt. Dies gilt sowohl für die aus Kunststoff bestehenden Verbindungselemente 14 als auch für die Tragstruktur 8, die die beiden plastisch umformbaren Teilstücke 13 umschließt.

Vorstehende Ausführungen verdeutlichen, dass die Kopfstütze sehr einfach hergestellt werden kann, da die Fertigung des Rahmens 9 selbst sowie das Einschäumen desselben auf bekannten Fertigungsverfahren beruhen. Auf Grund der relativ einfach gehaltenen Konstruktion sind die Produkt-, Entwicklungs- und Investmentkosten für die Realisation dieser Kopfstütze sehr gering. Ein weiterer Vorteile beruht darauf, dass die variable Anordnung der plastischen Deformationsteilstücke 13 im Rahmen 9 eine sehr individuelle Anpassung des vorderen Schaumteils 10 und damit des Komfortelements 11 an den Kopf des Insassen ermöglicht. Ist das Komfortelement sogar in seiner gesamten Fläche plastisch verformbar gestaltet, ist maximale Konturierbarkeit gewährleistet.

### Bezugszeichenliste

- Kopfstütze: 1
- Stange: 2
- Kopfstützenprallkörper: 3
- vordere Hälfte: 4
- hinteres Schaumteil: 5
- Aufnahme: 6
- Aufnahme: 7
- Tragstruktur: 8
- Rahmen: 9
- vorderes Schaumteil: 10
- Komfortelement: 11
- starres Teilstück: 12
- plastisch verformbares Teilstück: 13
- Verbindungselement: 14
- Vorsprung: 15
- Vorsprung: 16

## Patentansprüche

1. Kopfstütze (1) mit einem Kopfstützenprallkörper (3) und einem mit diesem verbindbaren sowie plastisch deformierbaren Komfortelement (11), wobei der Kopfstützenprallkörper (3) mit einer Sitzlehne verbindbar ist oder eine Einheit mit dieser bildet, und das Komfortelement (11) der Anlage des Kopfes dient, wobei das Komfortelement (11) um verschiedenen Raumachsen verformbar ist, **dadurch gekennzeichnet, dass** das Komfortelement (11) einen plastisch verformbaren Rahmen (9) aufweist, wobei der Rahmen (9) durch starre Teilstücke (12) und diese verbindende plastisch und um verschiedene Raumachsen beliebig umformbare Teilstücke (13) gebildet ist.

2. Kopfstütze nach Anspruch 1, **dadurch gekennzeichnet, dass** der Rahmen (9) im Wesentlichen rechteckig oder trapezförmig ist.

3. Kopfstütze nach Anspruch 1 oder 2, **dadurch gekennzeichnet, dass** der Rahmen (9) unmittelbar oder über eine diese aufnehmende, Bestandteil des Komfortelements bildende Tragstruktur (8) im Kopfstützenprallkörper (3) gelagert ist.

4. Kopfstütze nach einem der Ansprüche 1 bis 3, **dadurch gekennzeichnet, dass** das Komfortelement (11), insbesondere dessen Rahmen (9) oder dessen Tragstruktur (8), über eine Klipsverbindung mit dem Kopfstützenprallkörper (3) verbindbar ist.

5. Kopfstütze nach einem der Ansprüche 1 bis 4, **dadurch gekennzeichnet, dass** das Komfortelement (11) mit einem Bezug umgeben ist.

6. Kopfstütze nach einem der Ansprüche 1 bis 5, **dadurch gekennzeichnet, dass** das Komfortelement (11) ein plastisch umforbares Schaumteil (10) und einen von diesem aufgenommenen plastisch verformbaren Rahmen (9) aufweist.

7. Kopfstütze nach einem der Ansprüche 1 bis 6, **dadurch gekennzeichnet, dass** das Komfortelement (11) mit einem eigenständigen Bezug getrimmt ist.

8. Kopfstütze nach einem der Ansprüche 1 bis 7, **dadurch gekennzeichnet, dass** der Kopfstützenprallkörper (3) ohne Bezug ausgebildet ist und das Komfortelement (11) unmittelbar an einer Tragstruktur (6, 6) des Kopfstützenprallkörpers (3) befestigbar ist.

## Claims

1. Head restraint (1) equipped with an elastically deformable comfort element (3) and a with a comfort element (11) to be connected with it and being elastically deformable (11) wherein the elastically deformable comfort element (3) can be connected with a backrest which can be connected or forms a unity with it, and the comfort element (11) is designed to support the head, wherein the comfort element (11) can be deformed around different spatial axles, **characterized in that** the comfort element (11) is equipped with an elastically deformable frame (9) wherein the frame (9) is designed with inflexible partial components (12) and partial components (13) which can be arbitrarily formed around different spatial axles.

2. Head restraint according to claim 1, **characterized in that** the frame (9) is essentially rectangular or trapezoidal in its shape.

3. Head restraint according to claim 1 or 2, **characterized in that** the frame (9) is mounted directly or over a support structure (8) accepting it and being a component of the comfort element in the elastically deformable comfort element (3).

4. Head restraint according to one of the claims 1 to 3, **characterized in that** the comfort element (11), primarily its frame (9) or its support structure (8) can be connected through a clip connection with the elastically deformable comfort element (3).

5. Head restraint according to one of the claims 1 to 4, **characterized in that** the comfort element (11) is equipped with a cover.

6. Head restraint according to one of the claims 1 to 5, **characterized in that** the comfort element (11) is equipped with a plastically deformable foam component (10) and a deformable frame (9) inserted into it.

7. Head restraint according to one of the claims 1 to 6, **characterized in that** the comfort element (11) is trimmed by an independent cover.

8. Head restraint according to one of the claims 1 to 7, **characterized in that** the elastically deformable comfort element (3)is not equipped with a cover and the comfort element (11) can be fastened directly on a support structure (6, 6) of the elastically deformable comfort element (3).

## Revendications

1. Repose-tête (1) avec partie ferme d'appui-tête (3) et doté d'un élément de confort déformable de manière plastique (11) qui peut y être rattaché, où la partie ferme de repose-tête (3) est rattachable à un dossier ou bien constitue une unité avec celui-ci; l'élément de confort (11) sert à y appuyer la tête, où l'élément de confort (11) est déformable aux différents axes d'espace, **caractérisé en ce que** l'élément de confort (11) présente un cadre (9) plastique déformable, où le cadre (9) est conçu avec des sections fixes (12) et ces sections fixes indéformables étant reliées à souhait à ces différents axes d'espace plastique (13).

2. Repose-tête selon revendication 1, **caractérisé en ce que** le cadre (9) est essentiellement rectangulaire ou en forme de trapèze.

3. Repose-tête selon revendication 1 ou 2, **caractérisé en ce que** le cadre (9) est supporté directement ou par une structure porteuse (8) ajoutée à la partie constitutive de l'élément de confort dans la partie ferme d'appui-tête (3).

4. Repose-tête selon l'une des revendications 1 à 3, **caractérisé en ce que** l'élément de confort (11), en particulier son cadre (9) ou sa structure porteuse (8) est rattachable à la partie ferme de repose-tête (3) par une attache clip.

5. Repose-tête selon l'une des revendications 1 à 4, **caractérisé en ce que** l'élément de confort (11) est enveloppé d'une housse.

6. Repose-tête selon l'une des revendications 1 à 5, **caractérisé en ce que** l'élément de confort (11) présente une partie mousse déformable en plastique (10) et une inclus dans ce cadre (9) déformable en plastique.

7. Repose-tête selon l'une des revendications 1 à 6, **caractérisé en ce que** l'élément de confort (11) est garni d'une housse autonome.

8. Repose-tête selon l'une des revendications 1 à 6, **caractérisé en ce que** la partie ferme du repose-tête (3) est conçue sans housse et que l'élément de confort (11) est directement fixable à une structure porteuse (6, 6) de la partie ferme du repose-tête (3).
